# EUROPÄISCHE PATENTANMELDUNG

(11) **EP 1 410 972 A2**
(43) Veröffentlichungstag der Anmeldung: **21.04.2004**
(21) Anmeldenummer: 03021614.7
(22) Anmeldetag: 25.09.2003
(51) Int. Cl.: B62D 1/16

(54) **Fahrzeuglenkvorrichtung und Sicherheitssystem**

(30) Priorität: 18.10.2002 DE 20216068 U
(71) Anmelder: TRW Automotive Safety Systems GmbH, 63743 Aschaffenburg (DE)
(72) Erfinder: Keutz, Markus, 64380 Rossdorf (DE)
(74) Vertreter: Kitzhofer, Thomas, Dipl.-Ing.

(57) **Zusammenfassung**

Eine Fahrzeuglenkvorrichtung mit einer Lenksäule (22) und einem Lenkrad mit einem Lenkradkranz (24) ist dadurch gekennzeichnet, daß im Inneren der Lenksäule (22) eine Vibrationsvorrichtung (26; 26') angeordnet ist. Die Vibrationsvorrichtung ist so ausgelegt, daß sie ein an einer Oberfläche (28) des Lenkradkranzes (24) von einem Fahrer wahrnehmbares haptisches Signal erzeugen kann.

## Beschreibung

Die Erfindung betrifft eine Fahrzeuglenkvorrichtung mit einer Lenksäule und einem Lenkrad mit einem Lenkradkranz und ein Sicherheitssystem unter Verwendung einer Fahrzeuglenkvorrichtung.

Die zunehmende Reizdichte, der ein Fahrzeugführer im Straßenverkehr ausgesetzt ist, führt zu einer immer höheren Belastung und damit zu einer erhöhten Unfallgefahr. Deshalb ist es sinnvoll, wenn der Fahrer durch Warnsignale auf potentiell gefährliche Situationen frühzeitig aufmerksam gemacht werden kann.

Haptische Signale, die dem Fahrer z.B. über den Lenkradkranz mitgeteilt werden, sind gut geeignet, die Aufmerksamkeit des Fahrers zu erregen, ohne ihn abzulenken oder zu erschrecken.

Die Erfindung schlägt eine Möglichkeit vor, auf einfache Weise ein haptisches Signal zu erzeugen.

Dies wird bei einer oben genannten Fahrzeuglenkvorrichtung dadurch erreicht, daß im Inneren der Lenksäule eine Vibrationsvorrichtung angeordnet ist, die so ausgelegt ist, daß sie ein an einer Oberfläche des Lenkradkranzes von einem Fahrer wahrnehmbares haptisches Signal erzeugen kann. Der Platz im Inneren der Lenksäule ist bislang größtenteils ungenutzt und durchaus ausreichend, um eine derartige Vibrationsvorrichtung aufzunehmen, wohingegen der Platz im Inneren des Lenkrads oder gar im Inneren des Lenkradkranzes zum einen sehr beschränkt ist und zum anderen für das Gassackmodul, das inzwischen zur serienmäßigen Sicherheitsausstattung gehört, freigehalten werden muß. Eine Vibration, die in der Lenksäule erzeugt wird, überträgt sich gut auf den Lenkradkranz, da dieser generell über die Speichen und die Nabe des Lenkrades fest mit der Lenksäule verbunden ist.

In einer bevorzugten Ausführungsform der Erfindung umfaßt die Vibrationsvorrichtung einen Elektromagneten mit einer Spule und einem darin axial verschieblich angeordneten Anker. Die Vibration wird durch die Bewegung des Ankers in axialer Richtung aufgrund des vom Elektromagneten erzeugten Magnetfelds hervorgerufen. Durch eine unterschiedliche Ansteuerung des Elektromagneten bzw. der Veränderung des Versorgungsstroms der Spule läßt sich ein breites Frequenzspektrum an Vibrationen erzeugen. Dies erlaubt auf einfache Weise die jeweils günstigsten Frequenzen für eine bestimmte Geometrie der Fahrzeuglenkvorrichtung zu bestimmen und festzulegen. Es ist möglich, unterschiedliche Frequenzen zur Warnung vor verschiedenen Gefahrensituation einzusetzen.

In einer Ausführungsform der Erfindung ist vorgesehen, daß die Spule auf einem Spulenkörper aufgenommen ist und sich der Anker durch eine axiale Öffnung des Spulenkörpers hindurch erstreckt. Die axiale Öffnung des Spulenkörpers kann gleichzeitig eine Führung für den Anker bilden. Der Spulenkörper besteht bevorzugt aus einem geeigneten Kunststoff.

Der Elektromagnet kann sowohl so ausgelegt sein, daß der Anker relativ zur Spule in entgegengesetzten Axialrichtungen bewegt werden kann, als auch so, daß eine Bewegung des Ankers nur in einer axialen Richtung erfolgt.

Bevorzugt ist wenigstens eine Feder vorgesehen, die einer Bewegung des Ankers relativ zur Spule eine Kraft entgegensetzt. Die Feder kann die notwendige Rückstellkraft liefern, um den Anker zur Erzeugung einer Schwingungsbewegung zurück in Richtung Spule zu bewegen. Die Feder kann auch dazu dienen, die Bewegung des Ankers zu dämpfen und bei Nichtbetätigung der Vibrationsvorrichtung Klappergeräusche zu verhindern. Es ist möglich, Federn an einem oder an beiden axialen Enden des Ankers vorzusehen.

Am Anker kann wenigstens ein Anschlag vorgesehen sein, der eine axiale Bewegung des Ankers relativ zur Spule begrenzt.

Am Anker kann eine Zusatzmasse angeordnet sein, die einen weiteren Parameter zur Anpassung der Vibrationsfrequenz und -amplitude darstellt.

Bevorzugt wird der Spulenkörper auch zur Befestigung der Vibrationsvorrichtung in der Lenksäule eingesetzt. Dies erfolgt z.B. dadurch, daß der Spulenkörper in der Lenksäule durch Verpressen befestigt ist.

In einer anderen Ausführungsform ist vorgesehen, daß am Spulenkörper ein Rastelement ausgebildet ist und daß die Lenksäule eine ins Innere gerichtete Sicke aufweist, mit der das Rastelement in Eingriff ist. In diesem Fall ist die Montage der Vibrationsvorrichtung im Inneren der Lenksäule besonders einfach, da der Spulenkörper lediglich soweit in die Lenksäule eingeschoben werden muß, bis das Rastelement in der Sicke einrastet.

Die Fahrzeuglenkvorrichtung, die oben beschrieben wurde, wird bevorzugt in einem Sicherheitssystem eingesetzt, das eine Elektronikeinheit und wenigstens einen mit der Elektronikeinheit verbundenen Sensor aufweist, wobei die Elektronikeinheit so ausgelegt ist, daß sie auf ein Signal des Sensors hin die Vibrationsvorrichtung anspricht. Ein derartiges Sicherheitssystem kann sehr flexibel konfiguriert werden, um die Aufmerksamkeit des Fahrers auf bestimmte Dinge oder Situationen zu lenken.

Weitere Merkmale und Vorteile der Erfindung ergeben sich aus der nachfolgenden Beschreibung zweier Ausführungsbeispiele, in Zusammenhang mit den beigefügten Zeichnungen. In diesen zeigen:
- Figur 1a und 1b eine schematische Schnittansicht eines erfindungsgemäßen Sicherheitssystems mit einer Fahrzeuglenkvorrichtung gemäß einer ersten Ausführungsform; und
- Figur 2 eine schematische Schnittansicht einer erfindungsgemäßen Fahrzeuglenkvorrichtung gemäß einer zweiten Ausführungsform.

Figur la zeigt ein Sicherheitssystem 10, das eine Fahrzeuglenkvorrichtung 20 umfaßt, die wiederum eine Lenksäule 22, ein mit der Lenksäule verbundenes Lenkrad mit einem Lenkradkranz 24 sowie eine im Inneren der Lenksäule 22 angeordnete Vibrationsvorrichtung 26 enthält. Der Lenkradkranz ist auf bekannte Weise fest mit der Lenksäule 22 verbunden.

Die Vibrationsvorrichtung 26 ist so ausgelegt, daß sie ein an einer Oberfläche 28 des Lenkradkranzes 24 von einem Fahrer spürbares haptisches Signal erzeugen kann. Hierzu umfaßt die Vibrationsvorrichtung 26 einen Spulenkörper 30, auf dem eine Spule 32 eines Elektromagneten aufgenommen ist. Der Spulenkörper weist eine axiale Öffnung 34 auf, in der ein Anker 38 angeordnet ist, der sich in axialer Richtung A durch den Spulenkörper 30 hindurch erstreckt und sich in Axialrichtung A relativ zur Spule bewegen kann. Die Ausdehnung des Ankers 38 in Axialrichtung A ist so groß, daß er auf beiden Seiten aus dem Spulenkörper 30 herausragt.

Der Anker 38 ist an seinen beiden axialen Enden mit Anschlägen 42 versehen, deren Durchmesser größer ist als der Durchmesser der axialen Öffnung 34 des Spulenkörpers 30. Die Anschläge 42 begrenzen also eine Maximalbewegung des Ankers 38 in entgegengesetzten Axialrichtungen A.

Zwischen dem oberen Ende des Spulenkörpers 30 und dem oberen Anschlag 42 ist eine Feder 44 angeordnet, die eine Rückstellkraft erzeugt, die der durch das Magnetfeld der Spule 32 auf den Anker 38 erzeugten Kraft entgegenwirkt. Die Feder kann natürlich auch an anderer geeigneter Stelle angeordnet sein.

An der nicht durch die Feder 44 gebremsten axialen Seite des Ankers 38 ist zwischen Anschlag 42 und Außenseite des Spulenkörpers 30 eine Dämpfungsscheibe 46 angeordnet.

In diesem Beispiel ist am oberen Ende des Ankers 38 eine Zusatzmasse 40 befestigt, deren Größe einen Parameter zur Abstimmung der Fahrzeuglenkvorrichtung für spezifische Anforderungen, z.B. in Abhängigkeit vom Fahrzeugtyp, darstellt.

Die Spule wird durch eine Elektronikeinheit 50 angesteuert, die auch die Art des an die Spule angelegten Stromsignals bestimmt. Bei dieser Ausführungsform ist ein unipolares Signal ausreichend, da die Rückstellbewegung des Ankers 38 über die Feder 44 erfolgt. Das zur Ansteuerung des Elektromagneten der Vibrationsvorrichtung 26 verwendete Signal kann z.B. ein Rechtecksignal oder ein sinusförmiges Signal sein.

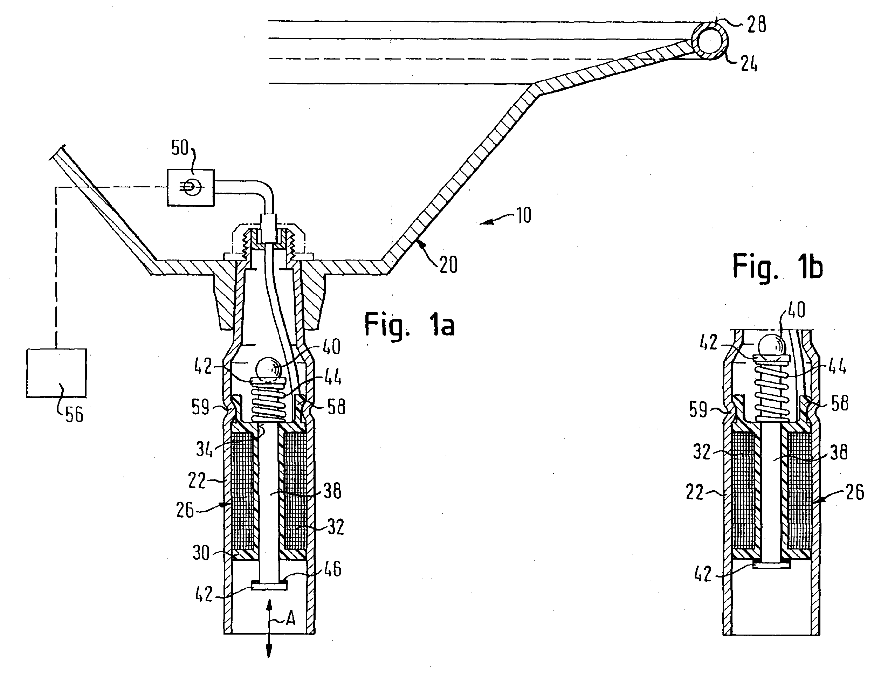

In Figur 1b ist der Anker 38 in einer maximal ausgelenkten Stellung gezeigt.

Die Elektronikeinheit 50 steuert die Spule 32 so an, daß sich der Anker 38 in einer geeigneten Frequenz und Amplitude bewegt, um eine an der Oberfläche 28 des Lenkradkranzes 24 spürbare Vibration zu erzeugen, durch die sich ein haptisches Signal an den Fahrer übermitteln läßt.

Die Elektronikeinheit 50 ist mit wenigstens einem Sensor 56 verbunden, der in Abhängigkeit von bestimmten Parametern oder Situationen, z.B. Gefahrensituationen, ein Signal an die Elektronikeinheit 50 übergibt. Bei Erhalt des Signals spricht die Elektronikeinheit 50 den Elektromagneten der Vibrationsvorrichtung 26 an, so daß eine Bewegung des Ankers 38 auf eine vorbestimmte Art bewirkt und eine vom Fahrer wahrnehmbare Vibration erzeugt wird. Es ist möglich, für verschiedene Situationen Signale unterschiedlicher Stärke und Frequenz zu verwenden.

An dem aus einem geeigneten Kunststoff bestehenden Spulenkörper 30 ist ein Rastelement 58 ausgebildet, das hier die Form einer Ausnehmung hat, die von einem Ende des Spulenkörpers und einem Rastvorsprung begrenzt ist (siehe Figur 1b). Die Innenseite der Lenksäule 22 weist eine korrespondierende Sicke 59 auf, die mit dem Rastelement 58 in Eingriff ist und so die Vibrationsvorrichtung 26 sicher in der Lenksäule 22 hält.

Zur Montage der Vibrationsvorrichtung 26 muß diese lediglich in das Innere der Lenksäule 22 eingeschoben werden, bis das Rastelement 58 und die Sicke 59 miteinander in Eingriff sind.

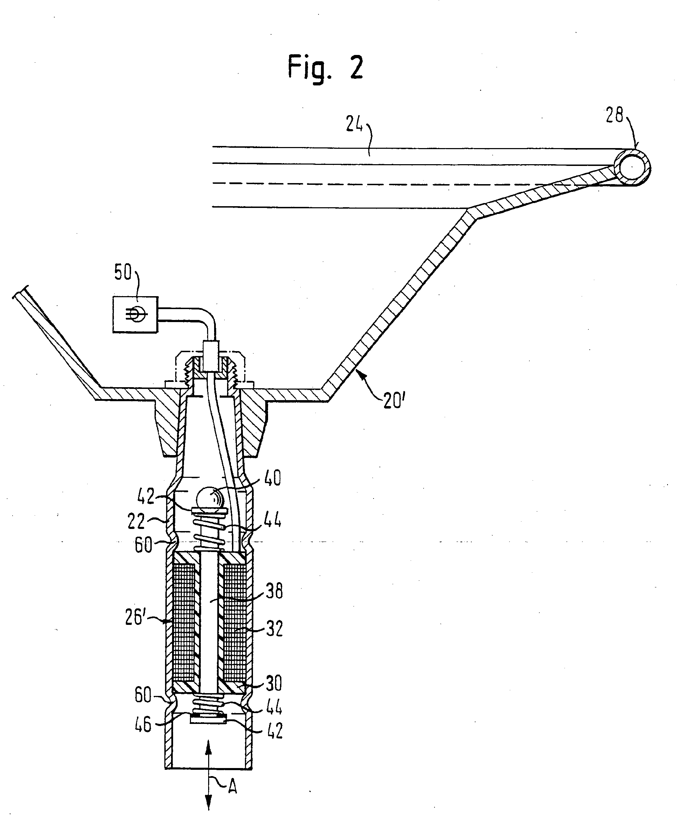

In der in Figur 2 gezeigten zweiten Ausführungsform der Erfindung sind an beiden axialen Enden des Ankers 38 zwischen dem Anschlag 42 und dem Ende des Spulenkörpers 30 angeordnete Federn 44 vorgesehen, die einer Bewegung des Ankers 38 in beiden, einander entgegensetzten Axialrichtungen A entgegenwirken. In diesem Fall wird die Spule 32 mit einem bipolaren Signal angesteuert, so daß der Elektromagnet die Vibrationsvorrichtung 26' den Anker 38 sowohl in positiver als auch in negativer Axialrichtung A bewegt. Die Federn 44 unterstützen die Bewegung des Ankers 38 und sorgen gleichzeitig für eine Dämpfung. Zusätzlich können wiederum eine oder mehrere Dämpfungsscheiben 46 vorgesehen sein.

Die Befestigung der Vibrationsvorrichtung 26' in der Lenksäule 22 erfolgt in diesem Fall durch Verpressen. Hierzu werden nach Einsetzen der Vibrationsvorrichtung 26' in die Lenksäule 22 in der Lenksäule 22 zwei Sicken 60 erzeugt, so daß die Vibrationsvorrichtung 26' im Inneren der Lenksäule 22 sicher gehalten ist.

Die jeweils in Zusammenhang mit den einzelnen Ausführungsformen beschriebenen Merkmale können auch in anderer Kombination umgesetzt werden.

## Patentansprüche

1. Fahrzeuglenkvorrichtung mit einer Lenksäule (22) und einem Lenkrad mit einem Lenkradkranz (24),
**dadurch gekennzeichnet, daß** im Inneren der Lenksäule (22) eine Vibrationsvorrichtung (26; 26') angeordnet ist,
die so ausgelegt ist, daß sie ein an einer Oberfläche (28) des Lenkradkranzes (24) von einem Fahrer wahrnehmbares haptisches Signal erzeugen kann.

2. Fahrzeuglenkvorrichtung nach Anspruch 1, **dadurch gekennzeichnet, daß** die Vibrationsvorrichtung (26; 26') einen Elektromagneten mit einer Spule (32) und einem darin axial verschieblich angeordneten Anker (38) umfaßt.

3. Fahrzeuglenkvorrichtung nach Anspruch 2, **dadurch gekennzeichnet, daß** die Spule (32) auf einem Spulenkörper (30) aufgenommen ist und der Anker (38) sich durch eine axiale Öffnung (34) des Spulenkörpers (30) hindurch erstreckt.

4. Fahrzeuglenkvorrichtung nach einem der Ansprüche 2 und 3, **dadurch gekennzeichnet, daß** wenigstens eine Feder (44) vorgesehen ist, die einer Bewegurig des Ankers (38) relativ zur Spule (32) eine Kraft entgegensetzt.

5. Fahrzeuglenkvorrichtung nach einem der Ansprüche 2 bis 4, **dadurch gekennzeichnet, daß** am Anker (38) wenigstens ein Anschlag (42) vorgesehen ist, der eine axiale Bewegung des Ankers (38) relativ zur Spule (32) begrenzt.

6. Fahrzeuglenkvorrichtung nach einem der Ansprüche 2 bis 5, **dadurch gekennzeichnet, daß** der Elektromagnet den Anker (38) relativ zur Spule (32) in entgegengesetzten Axialrichtungen (A) bewegen kann.

7. Fahrzeuglenkvorrichtung nach einem der Ansprüche 2 bis 6, **dadurch gekennzeichnet, daß** am Anker (38) eine Zusatzmasse (40) angeordnet ist.

8. Fahrzeuglenkvorrichtung nach einem der Ansprüche 2 bis 7, **dadurch gekennzeichnet, daß** ein Spulenkörper (30) in der Lenksäule (22) durch Verpressen befestigt ist.

9. Fahrzeuglenkvorrichtung nach einem der Ansprüche 2 bis 7, **dadurch gekennzeichnet, daß** am Spulenkörper (30) ein Rastelement (58) ausgebildet ist und daß die Lenksäule (22) eine ins Innere gerichtete Sicke (59) aufweist, mit der das Rastelement (58) in Eingriff ist.

10. Sicherheitssystem, mit einer Fahrzeuglenkvorrichtung (20; 20') nach einem der vorhergehenden Ansprüche, mit einer Elektronikeinheit (50) und wenigstens einem mit der Elektronikeinheit (50) verbundenen Sensor (56), wobei die Elektronikeinheit (50) so ausgelegt ist, daß sie auf ein Signal des Sensors (56) hin die Vibrationsvorrichtung (26; 26') ansteuert.
